(19) Europäisches Patentamt
European Patent Office
Office européen des brevets

(11) EP 2 443 928 A1

(12) **EUROPÄISCHE PATENTANMELDUNG**

(43) Veröffentlichungstag:
**25.04.2012 Patentblatt 2012/17**

(21) Anmeldenummer: **10188713.1**

(22) Anmeldetag: **25.10.2010**

(51) Int Cl.:
***A01N 43/56*** *(2006.01)* ***A01N 47/12*** *(2006.01)*
***A01N 43/80*** *(2006.01)* ***A01N 33/04*** *(2006.01)*
***A01N 33/12*** *(2006.01)* ***A01N 59/14*** *(2006.01)*
***A01N 31/08*** *(2006.01)* ***A01P 3/00*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **LANXESS Deutschland GmbH**
**51369 Leverkusen (DE)**

(72) Erfinder:
- **Koop, Bernd, Dr.**
  **50668 Köln (DE)**
- **Kugler, Martin, Dr.**
  **42799 Leichlingen (DE)**
- **Jaetsch, Thomas, Dr.**
  **50668 Köln (DE)**
- **Kaulen, Johannes, Dr.**
  **51519 Odenthal (DE)**
- **Gerharz, Tanja, Dr.**
  **40599 Düsseldorf (DE)**

(54) **Fungizide Penflufen Mischungen**

(57) Die Erfindung betrifft Penflufen enthaltende Mischungen, die Verwendung dieser Mischungen zum Schutz technischer Materialien und ein Verfahren zur Behandlung technischer Materialien mit den Penflufen Mischungen.

EP 2 443 928 A1

**Beschreibung**

Die Erfindung betrifft Penflufen enthaltende Mischungen, die Verwendung dieser Mischungen zum Schutz technischer Materialien und ein Verfahren zur Behandlung technischer Materialien mit den Penflufen Mischungen.

Penflufen (N-(2-[1,3-Dimethylbutylphenyl]-5-fluor-1,3-dimethyl-1H-pyrazol-4-carboxyamid) ist ein Pyrazolylcarboxanilide der Formel (I). Zudem ist Penflufen ein Fungizid.

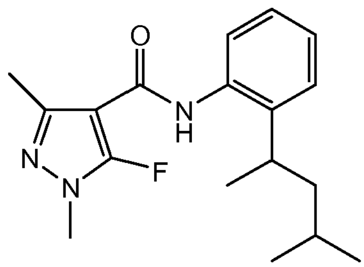

(I)

Pyrazolylcarboxanilide stellen spezielle Carboxamide dar und sind aus der WO 03/010149 zur Bekämpfung von unerwünschten Mirkroorganismen in Pflanzenschutz und Materialschutz bekannt. In der WO 03/010149 wird Penflufen in einer Liste von weiteren Pyrazolylcarboxaniliden genannt und die Wirkung von Penflufen als Pflanzenschutzmittel in einem Beispiel dargestellt. Spezielle Mischungen mit Penflufen werden nicht beschrieben.

Aus der WO 2006/114212 sind Wirkstoffkombinationen aus Carboxamiden mit bekannten insektiziden Wirkstoffen zur Bekämpfung von unerwünschten tierischen Schädlingen, sowie unerwünschten phytophathogenen Pilzen bekannt. Mischungen aus Penflufen und Insektiziden werden ebenfalls beschrieben.

Weitere Wirkstoffkombinationen mit Penflufen und Insektiziden sind aus und der WO 2009/098225 A2 bekannt.

Synergistische, fungizide Wirkstoffkombinationen, die Carboxamide enthalten, mit unterschiedlichsten Mischungspartnern sind aus der WO 2005/041653 bekannt. Auch hier wird Penflufen unter anderen als Mischungspartner benannt. Die Verwendung der synergistischen, fungiziden Wirkstoffkombinationen wird zur Bekämpfung phytopathogener Pilze beschrieben.

Weiterhin ist die Verwendung von Carboxamiden für den Pflanzenschutz und für den Materialschutz aus der WO2009/09821 und der WO2009/0901 bekannt.

Aus der WO 2005/058839 sind eine Vielzahl unterschiedlichster Fungizide, Bakterizide und Insektizide bekannt, die gegebenenfalls mit einem optisch aktiven Carboxamid, wie z.B. einem Enantiomeren des Penflufens zur Bekämpfung von unerwünschten Mikroorganismen im Pflanzenschutz und im technischen Materialschutz eingesetzt werden können. Spezielle Mischungsbeispiele werden nicht genannt. In einem Beispiel wird die Verwendung eines optisch aktiven Enantiomeren des Penflufens für den Pflanzenschutz dargestellt.

Weitere Wirkstoffkombinationen, die u.a. auch Penflufen enthalten können, sind aus der WO 2007/110173 und der WO 2008/014955 bekannt.

Nachteilig an den bekannten Wirkstoffkombinationen ist, dass ihre Wirksamkeit gegen Mikroorganismen im Materialschutz nicht immer ausreichend ist.

Es bestand daher ein Bedürfnis nach weiteren Wirkstoffkombinationen, die technischen Materialien, insbesondere Holz, Holzwerkstoffen oder Holz-Plastik-Verbundstoffen, besonderen Schutz gegen Mikroorganismen bieten.

Überraschend wurden neue synergistische Wirkstoffkombinationen gefunden, die Penflufen enthalten und die Nachteile des Standes der Technik überwinden.

Gegenstand der Erfindung sind daher Zusammensetzungen, enthaltend

a) Penflufen
und

b) mindestens eine Verbindung ausgewählt aus der Gruppe Phenole, Borverbindungen, Verbindungen der Formel (II)

$$((R^1R^2R^3R^4)N)_nX \qquad (II)$$

wobei

$R^1$ oder $R^2$ gleich oder verschieden sein können und unabhängig voneinander für $C_1$-$C_6$-Alkyl stehen und

$R^3$ oder $R^4$ gleich oder verschieden sein können und unabhängig voneinander ausgewählt sind aus der Gruppe $C_6$-$C_{22}$-Alkyl, $C_6$-$C_{22}$-Alkenyl, $C_6C_{24}$-Aryl, $C_5$-$C_{20}$-Cycloalkyl oder Reste der Formel (IV)

$$-[CH_2-CH_2-O]_z-CH_2-CH_2-OH \qquad (IV)$$

wobei z = 1, 2, 3, 4, 5, 6, 7, 8, 9 oder 10 ist und

X ein k-fach geladenes Anion ist und

n eine beliebige ganze Zahl größer als Null darstellt, Isothiazolinone, 3-Iod-2-propinyl-alkylcarbamate, 3-Iod-2-propinylcycloalkylcarbamate, 3-Iod-2-propinyl-arylcarbamat und Verbindungen der Formel (III)

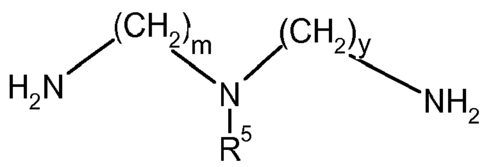

(III)

in der

$R^5$ $C_8$-$C_{18}$-Alkyl, $C_8$-$C_{18}$-Alkenyl oder $C_5$-$C_{20}$-Cycloalkyl und

m und y gleich und verschieden sein können und eine Zahl 1, 2, 3, 4, 5 oder 6 darstellen sowie deren Säureadditionsverbindungen.

Penflufen kann sowohl als Racemat, in enantiomerenreiner Form oder als angereichertes Enantiomerengemisch eingesetzt werden. Auch eine Verwendung als Salz oder Säureadditionsverbindung ist möglich, wobei unter Salzen insbesondere Natrium-, Kalium-, Magnesium-, Calcium- , Zink-, Aluminium-, Eisen- und Kupfer-Salze verstanden wird und unter Säureadditionsverbindungen insbesondere Addukte mit Halogenwasserstoffsäuren, z.B. Chlorwasserstoff und Bromwasserstoff, Carbonsäuren, wie z.B. Ameisensäure, Essigsäure, Weinsäure und Oxalsäure, Sulfonsäuren, wie z.B. p-Toluolsulfonsäure sowie Schwefelsäure, Phosphorsäure und Salpetersäure verstanden wird.

Bevorzugt handelt es sich bei den Phenolen um Tribromphenol, Tetrachlorphenol, 3-Methyl-4-chlorphenol, 3,5-Dimethyl-4-chlorphenol, Dichlorphen, 2-Benzyl-4-chlorphenol, Triclosan, Diclosan, Hexachlorophen, p-Hydroxybenzoesäureester, o-Phenylphenol, m-Phenylphenol, p-Phenylphenol, 4-(2-tert.-Butyl-4-methyl-phenoxy)-phenol, 4-(2-Isopropyl-4-methyl-phenoxy)-phenol, 4-(2,4-Dimethyl-phenoxy)-phenol und deren Alkali- und Erdalkalimetallsalze oder Mischungen aus diesen Verbindungen. Besonders bevorzugt werden als Phenole Phenylphenole eingesetzt. Ganz besonders bevorzugt wird o-Phenylphenol eingesetzt.

Bevorzugt handelt es sich bei den Borverbindungen um anorganischen Borverbindungen. Besonders bevorzugt handelt es sich bei den Borverbindungen um Alkali- oder Erdalkalimetallborate, wie z.B. Natriumtetraborat, Dinatriumtetraborat Decahydrat (Natriumborat, B o r a x) oder Dinatriumoctaborat Tetrahydrat, oder um Borsäure, Boroxid, Borsäureanhydrid, oder Borsäureester oder Mischungen dieser Verbindungen. Ganz besonders bevorzugt werden Mischungen mit Boroxid, Borax und Borsäure eingesetzt.

Die Verbindungen der Formel (II) stellen organische, quartäre Ammoniumverbindungen dar. Bevorzugt sind die Verbindungen der Formel (II) Benzalkoniumchlorid, Benzyldimethyltetradecylammoniumchlorid, Benzyldimethyldodecylammoniumchlorid, Dichlorbenzyldimethylalkylammoniumchlorid, Didecyldimethylammmoniumchlorid, Dioctyldimethylammoniumchlorid, Hexadecyltrimethylammoniumchlorid, Didecyhnethylpoly(oxyethyl)ammoniumpropionat, Didecyldimethylammoniumcarbonat, Didecyldimethylammoniumhydrogencarbonat. Besonders bevorzugt sind Mischungen mit Didecylmethylpoly(oxyethyl)ammoniumpropionat, Benzalkoniumchlorid, Didecyldimethylammmoniumchlorid, Didecyldimethylammoniumcarbonat und Didecyldimethylammoniumhydrogencarbonat.

Die Reste mit der Formel (IV) stellen Derivate von Polyethylenglykolen dar.

z ist bevorzugt 2, 3, 4 oder 5.

$R^1$ oder $R^2$ stehen unabhängig voneinander bevorzugt für Methyl, Ethyl, n-Propyl, iso-Propyl, n-Butyl, sec.-Butyl, tert.-Butyl oder n-Pentyl. Besonders bevorzugt stehen $R^1$ oder $R^2$ für Methyl.

$R^3$ oder $R^4$ stehen unabhängig voneinander bevorzugt für Phenyl, Benzyl, o-, m-, p- Xylol, o-, m-, p-Trimethylphenyl, o-, p-, m-Chlorbenzyl, $-CH_2-CH_2-O-CH_2-CH_2-OH$, $—[CH_2-CH_2-O]_2-CH_2-CH_2-OH$, $—[CH_2-CH_2-O]_3-CH_2-CH_2-OH$ , —

$[CH_2-CH_2-O]_4-CH_2-CH_2-OH$, Dichlorbenzyl, n-, iso-Nonyl, n-, iso-Decyl, n-, iso-Dodecyl, n-, iso-Tetradecyl, n-, iso-Hexadecyl, n-, iso-Octenyl, n-, iso-Nonenyl oder n-, iso-Decenyl. Besonders bevorzugt stehen $R^3$ oder $R^4$ unabhängig voneinander für Benzyl, $—CH_2-CH_2-O-CH_2-CH_2-OH$, $—[CH_2-CH_2-O]_2-CH_2-CH_2-OH$, $—[CH_2-CH_2-O]_3-CH_2-CH_2-OH$ , $—[CH_2-CH_2-O]_4-CH_2-CH_2-OH$, Dichlorbenzyl, n-, iso-Nonyl, n-, iso-Decyl, n-, iso-Dodecyl, n-, iso-Tetradecyl, n-, iso-Hexadecyl, n-, iso-Octenyl, n-, iso-Nonenyl oder n-, iso-Decenyl.

X stellt bevorzugt ein Halogenid, Carbonat, Hydrogencarbonat, Borat, Sulfat, Hydroxid oder Carboxylat dar. Besonders bevorzugt stellt X ein Chlorid, Hydrogencarbonat oder Carbonat dar.

n ist bevorzugt 1, 2 oder 3.

Bevorzugt handelt es sich bei den Isothiazolinonen um N-Methylisothiazolin-3-on, 5-Chlor-N-methylisothiazolin-3-on, 4,5-Dichloro-N-octylisothiazolin-3-on (DCOIT), 5-Chlor-N-octylisothiazolinon, N-Octyl-isothiazolin-3-on, 4,5-Trimethylen-isothiazolinon und 4,5-Benzisothiazolinon. Besonders bevorzugt wird als Isothiazolinon 4,5-Dichloro-N-octylisothiazolin-3-on (DCOIT) eingesetzt.

3-Iod-2-propinyl-alkylcarbamat steht bevorzugt für 3-Iod-2-propinyl-N-butylcarbamat (IPBC) und 3-Iod-2-propinyl-N-hexylcarbamat. Besonders bevorzugt steht 3-Iod-2-propinyl-alkylcarbamat für 3-Iod-2-propinyl-N-butylcarbamat.

3-Iod-2-propinyl-cycloalkylcarbamat steht bevorzugt für 3-Iod-2-propinyl-cyclohexylcarbamat.

3-Iod-2-propinyl-arylcarbamat steht bevorzugt für 3-Iod-2-propinyl-N-phenylcarbamat.

Die Verbindungen der Formel (III) stellen tertiäre Amine dar. Besonders bevorzugt stehen die Verbindungen der Formel (III) für N-(3-Aminopropyl)-N-dodecyl-1,3-propandiamin, N-(3-Aminopropyl)-N-decyl-1,3-propandiamin, N-(3-Aminopropyl)-N-tetradecyl-1,3-propandiamin sowie deren Säureadditionsverbindungen.

Unter Säureadditionsverbindungen der Verbindungen der Formel (III) werden insbesondere Addukte mit Halogenwasserstoffsäuren, z.B. Chlorwasserstoff und Bromwasserstoff, Carbonsäuren, wie z.B. Ameisensäure, Essigsäure, Weinsäure und Oxalsäure, Sulfonsäuren, wie z.B. p-Toluolsulfonsäure sowie Schwefelsäure, Phosphorsäure und Salpetersäure verstanden.

$R^5$ steht bevorzugt für n-, iso-Octyl, n-, iso-Nonyl, n-, iso-Decyl, n-, iso-Dodecyl, n-, iso-Hexadecyl, n-, iso-Octenyl, n-, iso-Nonenyl, n-, iso-Decenyl, Cyclopentyl oder Cyclohexyl.

Besonders bevorzugt steht $R^5$ für Dodecyl, Tetradecyl oder Decyl.

m steht bevorzugt für 2, 3 oder 4. y steht bevorzugt für 2, 3 oder 4.

Alkyl beziehungsweise Alkenyl stehen jeweils unabhängig für einen geradkettigen, zyclischen oder verzweigten Alkyl- beziehungsweise Akenyl-Rest.

$C_1$-$C_6$-Alkyl steht beispielsweise für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3 , 3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl und 1-Ethyl-2-methylpropyl. Bevorzugt steht $C_1$-$C_6$-Alkyl für Methyl, Ethyl, n-Propyl, iso-Propyl, n-Butyl, sec.-Butyl, tert.-Butyl, n-Pentyl, 1-Methylbutyl und n-Hexyl. $C_8$-$C_{18}$-Alkyl und/oder $C_6$-$C_{22}$-Alkyl stehen beispielsweise und vorzugsweise für n-, iso-Octyl, n-, iso-Nonyl, n-iso-Decyl, n-, iso-Dodecyl oder n-, iso-Hexadecyl.

Beispielhaft und vorzugsweise stehen $C_8$-$C_{18}$-Alkenyl und/oder $C_6$-$C_{22}$-Alkenyl für n-, iso-Octenyl, n-, iso-Nonenyl, n- oder iso-Decenyl oder aber auch für mehrfach ungesättigte $C_8$-$C_{18}$-Alkenylreste.

Beispielhaft und vorzugsweise steht $C_5$-$C_{20}$-Cycloalkyl für Cyclopentyl oder Cyclohexyl.

$C_6$-$C_{24}$-Aryl steht im Rahmen der Erfindung für einen mono-, bi- oder trizyklischen carbozyklischen aromatischen Rest mit vorzugsweise 6 bis 24 aromatischen Kohlenstoffatomen, der gegebenenfalls durch Halogene weiter substituiert sein kann. Beispielhaft und bevorzugt steht $C_6$-$C_{24}$-Aryl für Biphenyl, Phenyl, o-, p-, m-Chlorbenzyl, Dichlorbenzyl, Naphthyl, o-, m-, p- Benzyl, o-, m-, p-Xylol oder o-, m-, p- Trimethylphenyl. Besonders bevorzugt stehen $C_6$-$C_{24}$-Aryl für o-, m-, p-Benzyl, o-, p-, m-Chlorbenzyl oder Dichlorbenzyl.

Bevorzugt sind Zusammensetzungen, die

a) Penflufen
und

b) mindestens eine Verbindung ausgewählt aus den Gruppen

- der Phenole:

  Tribromphenol, Tetrachlorphenol, 3-Methyl-4-chlorphenol, 3,5-Dimethyl-4-chlorphenol, Dichlorphen, 2-Benzyl-4-chlorphenol, Triclosan, Diclosan, Hexachlorophen, p-Hydroxybenzoesäureester, o-Phenylphenol, m-Phenylphenol, p-Phenylphenol, 4-(2-tert.-Butyl-4-methyl-phenoxy)-**phenol,** 4-(2-Isopropyl-4-methyl-phenoxy)-**phenol,** 4-(2,4-Dimethyl-phenoxy)-phenol und deren Alkali- und Erdalkalimetallsalze,

- der Borate:

  Alkalimetallborate, Erdalkalimetallborate, Borsäure, Boroxid, Borsäureanhydrid, oder Borsäureester,

- der organischen, quartären Ammoniumverbindungen: Benzalkoniumchlorid, Benzyldimethyltetradecylammoniumchlorid, Benzyldimethyldodecylammoniumchlorid, Dichlorbenzyldimethylalkylammoniumchlorid, Didecyldimethylammmoniumchlorid, Dioctyldimethyla **mmoniumchlorid,** H e x adecyltrimethylammoniumchlorid, Didecyl-methylpoly(oxyethyl)ammoniumpropionat, Didecyldimethylammoniumcarbonat, Didecyldimethylammoniumhydrogencarbonat, 1-Hexadecyl-pyridinium-chlorid,

- der Isothiazolinone:

  N-Methylisothiazolin-3-on, 5-Chlor-N-methylisothiazolin-3-on, 4,5-Dichloro-N-octyliso-thiazolin-3-on (DCOIT), 5-Chlor-N-octylisothiazolinon, N-Octyl-isothiazolin-3-on, 4,5-Trimethylen-isothiazolinon und 4,5-Benzisothiazolinon,

- der Carbamate:

  3-Iod-2-propinyl-N-butylcarbamat, 3-Iod-2-propinyl-N-hexylcarbamat, 3-Iod-2-propinyl-cyclohexylcarbamat,

- der tertiären Amine:

  N-(3-Aminopropyl)-N-dodecyl-propan-1,3-diamin, N-(3-Aminopropyl)-N-decyl-propan-1,3-diamin, N-(3-Aminopropyl)-N-tetradecyl-propan-1,3-diamin.

Besonders bevorzugt sind Zusammensetzungen, die

a) Penflufen
und

b) mindestens eine Verbindung ausgewählt aus der Gruppe o-Phenylphenol, m-Phenylphenol, p-Phenylphenol und deren Alkali- und Erdalkalimetallsalze

Natriumborat, Borsäure, Boroxid, Borsäureanhydrid, Borsäureester,
**[0034]** Benzalkoniumchlorid, Didecyldimethylammoniumchlorid, Didecylmethylpoly(oxyethyl)-ammoniumpropionat, Didecyldimethylammoniumcarbonat, Didecyldimethylammoniumhydrogencarbonat,
4,5-Dichloro-N-octylisothiazolin-3-on,
3-Iod-2-propinyl-N-butylcarbamat,
N-(3-Aminopropyl)-N-dodecyl-propan-1,3-diamin
enthalten.
Ganz besonders bevorzugt sind Zusammensetzungen, die

a) Penflufen
und

b) mindestens eine Verbindung ausgewählt aus der Gruppe o-Phenylphenol und dessen Alkali-und Erdalkalimetallsalze

Natriumborat, Borsäure, Boroxid, Mischungen mit Boroxid, Borax und Borsäure
Benzalkoniumchlorid, Didecyldimethylammoniumchlorid, Didecylmethylpoly(oxyethyl)-ammoniumpropionat, Didecyldimethylammoniumcarbonat, Didecyldimethylammoniumhydrogencarbonat oder eine Mischung aus Didecyldimethylammoniumcarbonat und Didecyldimethylammoniumhydrogencarbonat (Carboquat)
4,5-Dichloro-N-octylisothiazolin-3-on,
3-Iod-2-propinyl-N-butylcarbamat,
N-(3-Aminopropyl)-N-dodecyl-propan-1,3-diamin
enthalten.
Folgende Zusammensetzungen sind noch weiter bevorzugt:

**Tabelle 1**

| Mischungspartner a) Penflufen | Mischungspartner b) |
|---|---|
| Penflufen | Natriumborat |
| Penflufen | Borsäure |
| Penflufen | Boroxid |
| Penflufen | Benzalkoniumchlorid |
| Penflufen | Didecyldimethylammoniumchlorid |
| Penflufen | Didecyldimethylammoniumcarbonat und Didecyldimethylammoniumhydrogencarbonat (Carboquat) |
| Penflufen | Didecyhnethylpoly(oxyethyl)ammoniumpropionat |
| Penflufen | 4,5-Dichloro-N-octylisothiazolin-3-on |
| Penflufen | 3-Iod-2-propinyl-N-butylcarbamat |
| Penflufen | N-(3-Aminopropyl)-N-dodecyl-1,3- propandiamin |
| Penflufen | o-Phenylphenol |

Der Rahmen der Erfindung erfasst alle oben stehenden und im Folgenden aufgeführten allgemeinen oder in Vorzugsbereichen genannten Restedefinitionen, Parameter und Erläuterungen untereinander, also auch zwischen den jeweiligen Bereichen und Vorzugsbereichen in beliebiger Kombination.

Penflufen wird vorzugsweise zu einer Verbindung ausgewählt aus b) (Tabelle 1) im Gewichtsverhältnis von 50 : 1 bis 1 : 50, insbesondere von 20 : 1 bis 1 : 20, bevorzugt von 10 : 1 bis 1 : 10 eingesetzt.

Zudem wurde eine besondere synergistische Wirkung von Penflufen mit 3-Iod-2-propinyl-N-butylcarbamat und mit 4,5-Dichloro-N-octylisothiazolin-3-on bei bestimmten Mischungsverhältnissen festgestellt.

Daher ist besonders bevorzugt eine Zusammensetzungen aus Penflufen und 3-Iod-2-propinyl-N-butylcarbamat die 85 Gew.-% bis 75 % Gew.% Penflufen und 15 Gew.-% bis 25 % Gew.-% 3-Iod-2-propinyl-N-butylcarbamat enthält.

Besonders bevorzugt enthalten die Zusammensetzungen aus Penflufen und Isothiazolinonen mehr als 50 Gew.-% Penflufen. Ganz besonders bevorzugt enthalten die Mischungen mindestens 50 Gew.-% Penflufen und mindestens 10 Gew.-% 4,5-Dichloro-N-octylisothiazolin-3-on.

Die erfindungsgemäß eingesetzten Zusammensetzungen können fest oder flüssig zum Einsatz kommen. Dabei kommen Formulierungen wie Lösungen, Emulsionen, Suspensionen, Pulver, Granulate, Pasten, Aerosole sowie Feinstverkapselungen in polymeren Stoffen in Frage.

Solche Formulierungen können in bekannter Weise hergestellt werden, z.B. durch Vermischen der Zusammensetzungen mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können auch organische Lösungsmittel als Hilfslösungsmittel mitverwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycerol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter normalem Druck gasförmig sind, z.B. Aerosol-Treibgase, wie Halogenkohlenwasserstoffe sowie Butan, Propan, Stickstoff und Kohlendioxid. Als feste Träger kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolit, Dolomit sowie synthetische Granulate aus anorganischem und organischem Mehlen sowie Granulate aus organischem Material wie Sägemehl, Kokosnussschalen, Maiskolben und Tabakstängeln. Als Emulgier- und/oder schaumerzeugende Mittel kommen in Frage: z.B. nichtionische und anionische Emulgatoren, wie Polyoxyethylen-Fettsäureester, Polyoxyethylen-Fettalkoholether, z.B. Alkylarylpolyglycolether, Alkylsulfonate, Alkylsulfate, Arylsulfonate sowie Eiweißhydrolysate. Als Dispergiermittel kommen in Frage: z.B. Ligninsulfitablaugungen und Methylcellulose.

Es können in den Formulierungen zudem Haftmittel wie Carboxymethylcellulose, natürliche und synthetische, pulverige, körnige oder latexförmige Polymere verwendet werden, wie Gummi arabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Die Zusammensetzungen können weiterhin Farbstoffe wie anorganische Pigmente, z.B. Eisenoxid, Titanoxid, Ferrocyanblau, Kupferoxid und organische Farbstoffe, wie Alizarin-, Azo- und Metallphthalocyaninfarbstoffe enthalten.

Die eingesetzte Zusammensetzung enthält im Allgemeinen vorzugsweise 0,1 bis 95 Gewichtsprozent der Komponenten a) und b), vorzugsweise 0,5 bis 90 Gew.-%.

Die verwendungsgemäßen Zusammensetzungen können auch noch weitere Wirkstoffe beispielsweise. Fungizide, Bakterizide und/oder Insektizide enthalten, um so z.B. das Wirkungs-spektrum zu verbreitern oder Resistenzentwicklungen vorzubeugen. In vielen Fällen erhält man dabei synergistische Effekte, d.h. die Wirksamkeit kombinierter Wirkstoffe ist größer als die Wirksamkeit der Einzelkomponenten.

Besonders günstige Mischungspartner sind z.B. die folgenden Verbindungen:

Triazole wie:

Azaconazol, Bitertanol, Bromuconazol, Cyproconazol, Diclobutrazol, Difenoconazol, Diniconazol, Epoxyconazol, Etaconazol, Fenbuconazol, Fluquinconazol, Flusilazol, Flutriafol, Furconazol, Hexaconazol, Imibenconazol, Ipconazol, Myclobutanil, Metconazol, Penconazol, Propiconazol, Prothioconazol, Simeconazol, Tebuconazol, Tetraconazol, Triadimefon, Triadimenol, Triticonazol und Uniconazol sowie deren Metallsalze und Säureaddukte;

Imidazole wie:

Clotrimazol, Bifonazol, Climbazol, Econazol, Fenapanil, Imazalil, Isoconazol, Ketoconazol, Lombazol, Miconazol, Pefurazoat, Prochloraz, Triflumizol sowie deren Metallsalze und Säureaddukte;

Pyridine und Pyrimidine wie:

Ancymidol, Buthiobate, Fenarimol, Mepanipyrin, Nuarimol, Pyroxyfur, Triamirol ;

Succinat-Dehydrogenase Inhibitoren wie:

Benodanil, Bixafen, Boscalid, Carboxim, Carboximsulfoxid, Cyclafluramid, Fenfuram, Flutanil, Furametpyr, Furcarbanil, Furmecyclox, Mebenil, Mepronil, Methfuroxam, Metsulfovax, Nicobifen, Pyrocarbolid, Oxycarboxin, Shirlan, Seedvax;

Naphthalin-Derivate wie:

Terbinafine, Naftifine, Butenafine, 3-Chloro-7-(2-aza-2,7,7-trimethyl-oct-3-en-5-in);

Sulfenamide wie:

Dichlofluanid, Tolylfluanid, Folpet, Fluorfolpet; Captan, Captofol;

Benzimidazole wie:

Carbendazim, Benomyl, Fuberidazol, Thiabendazol oder deren Salze;

Morpholinderivate wie:

Aldimorph, Dimethomorph, Dodemorph, Falimorph, Fenpropidin Fenpropimorph, Tridemorph, Trimorphamid und ihre arylsulfonsauren Salze, wie z.B. p-Toluolsulfonsäure und p-Dodecylphenylsulfonsäure;

Benzthiazole wie:

2-Mercaptobenzothiazol;

Benzthiophendioxide wie:

Benzo[b]thiophen-S,S-dioxid-carbonsäurecyclohexylamid;

Benzamide wie:

2,6-Dichloro-N-(4-trifluoromethylbenzyl)-benzamide, Tecloftalam;

Borverbindungen wie:

Borsäure, Borsäureester, Borax;

Formaldehyd und formaldehydabspaltende Verbindungen wie:

Benzylalkoholmono-(poly)- hemiformal, n-Butanol-hemiformal, Dazomet, Ethylenglycol-hemiformal, Hexa-hydro-S-triazine, Hexamethylentetramin, N-Hydroxymethyl-N'-methylthioharnstoff, N-Methylolchloracetamid, Oxazolidine, Paraformaldehyd, Taurolin, Tetrahydro-1,3-oxazin, N-(2-Hydroxypropyl)-amin-methanol, Tetramethylol-acetylen-diharnstoff;

Isothiazolinone wie:

N-Methylisothiazolin-3-on, 5-Chlor-N-methylisothiazolin-3-on, 4,5-Dichloro-N-octylisothiazolin-3-on, 5-Chlor-N-octylisothiazolinon, N-Octyl-isothiazolin-3-on, 4,5-Trimethylen-isothiazolinone, 4,5-Benzisothiazolinone;

Aldehyde wie:

Zimtaldehyd, Formaldehyd, Glutardialdehyd, ß-Bromzimtaldehyd, o-Phthaldialdehyd;

Thiocyanate wie:

Thiocyanatomethylthiobenzothiazol, Methylenbisthiocyanat;

quartäre Ammoniumverbindungen und Guanidine wie:

Benzalkoniumchlorid, Benzyldimethyltetradecylammoniumchlorid, Benzyldimethyldodecylammoniumchlorid, Dichlorbenzyl-dimethyl-alkyl-ammoniumchlorid, Didecyldimethylammoniumchlorid, Dioctyl-dimethyl-ammoniumchlorid, N-Hexadecyl-trimethyl-ammoniumchlorid, 1-Hexadecyl-pyridinium-chlorid, Iminoctadine-tris(albesilate);

Iodderivate wie:

Diiodmethyl-p-tolylsulfon, 3-Iod-2-propinyl-alkohol, 4-Chlorphenyl-3-iodpropargylformal, 3-Brom-2,3-diiod-2-propenylethylcarbamat, 2,3,3-Triiodallylalkohol, 3-Brom-2,3-diiod-2-propenylalkohol, 3-Iod-2-propinyl-n-butylcarbamat, 3-Iod-2-propinyl-n-hexylcarbamat, 3-Iod-2-propinyl-cyclohexyl-carbamat, 3-Iod-2-propinyl-phenylcarbamat;

Phenole wie:

Tribromphenol, Tetrachlorphenol, 3-Methyl-4-chlorphenol, 3,5-Dimethyl-4-chlorphenol, Dichlorphen, 2-Benzyl-4-chlorphenol, Triclosan, Diclosan, Hexachlorophen, p-Hydroxybenzoesäureester, o-Phenylphenol, m-Phenylphenol, p-Phenylphenol, 4-(2-tert.-Butyl-4-methyl-phenoxy)-phenol, 4-(2-Isopropyl-4-methyl-phenoxy)-phenol, 4-(2,4-Dimethyl-phenoxy)-phenol und deren Alkali- und Erdalkalimetallsalze;

Mikrobizide mit aktivierter Halogengruppe wie:

Bronopol, Bronidox, 2-Brom-2-nitro-1,3-propandiol, 2-Brom-4'-hydroxy-acetophenon, 1-Brom-3-chlor-4,4,5,5-tetramethyl-2-imidazoldinone, ß-Brom-ß-nitrostyrol, Chloracetamid, Chloramin T, 1,3-Dibrom-4,4,5,5-tetrametyl-2-imidazoldinone, Dichloramin T, 3,4-Dichlor-(3H)-1,2-dithiol-3-on, 2,2-Dibrom-3-nitril-**propionamid**, 1,2-Dibrom-2,4-**dicyanobutan, Halane,** H alazone, Mucochlorsäure, Phenyl-(2-chlor-cyan-vinyl)sulfon, Phenyl-(1,2-dichlor-2-cyanvinyl)sulfon, Trichlorisocyanursäure;

Pyridine wie:

1-Hydroxy-2-pyridinthion (und ihre Cu-, Na-, Fe-, M n-, Zn-Salze), Tetrachlor-4-methylsulfonylpyridin, Pyrimethanol, Mepanipyrim, Dipyrithion, 1-Hydroxy-4-methyl-6-(2,4,4-trimethylpentyl)-2(1H)-pyridin;

Methoxyacrylate oder ähnliches wie:

Azoxystrobin, Dimoxystrobin, Fluoxastrobin, Kresoxim-methyl, Metominostrobin, Orysastrobin, Picoxystrobin, Pyraclostrobin, Trifloxystrobin;

Metallseifen wie:

Salze der Metalle Zinn, Kupfer und Zink mit höheren Fett-, Harz-, Naphthensäuren und Phosphorsäure wie z.B. Zinn-, Kupfer-, Zinknaphtenat, -octoat, 2-ethylhexanoat, -oleat, -phosphat, - benzoat;

Metallsalze wie:

Salze der Metalle Zinn, Kupfer, Zink, sowie auch Chromate und Dichromate wie z.B. Kupferhydroxycarbonat, Natriumdichromat, Kaliumdichromat, Kaliumchromat, Kupfersulfat, Kupferchlorid, Kupferborat, Zinkfluorosilikat, Kupferfluorosilikat;

Oxide wie:

Oxide der Metalle Zinn, Kupfer und Zink wie z.B. Tributylzinnoxid, $Cu_2O$, CuO, ZnO;

Oxidationsmittel wie:

Wasserstoffperoxid, Peressigsäure, Kaliumpersulfat;

Dithiocarbamate wie:

Cufraneb, Ferban, Kalium-N-hydroxymethyl-N'-methyl-dithiobarbamat, Na- oder K-dimethyldithiocarbamat, Mancozeb, Maneb, Metam, Metiram, Thiram, Zineb, Ziram;

Nitrile wie:

2,4,5,6-Tetrachlorisophthalodinitril, Dinatrium-cyano-dithioimidocarbamat;

Chinoline wie:

8-Hydroxychinolin und deren Cu-Salze;

sonstige Fungizide und Bakterizide wie:

Bethozaxin, 5-Hydroxy-2(5H)-furanon; 4,5-Benzdithiazolinon, 4,5-Trimethylendithiazolinon, N-(2-p-Chlorbenzoylethyl)-hexaminiumchlorid, 2-Oxo-2-(4-hydroxy-phenyl)acethydroximsäure-chlorid, Tris-N-(cyclohexyldiazeniumdioxy)-aluminium, N-(Cyclohexyldiazeniumdioxy)-tributylzinn bzw.
K-Salze, Bis-N-(cyclohexyldiazeniumdioxy)-kupfer, Iprovalicarb, Fenhexamid, Spiroxamine, Carpropamid, Diflumetorin, Quinoxyfen, Famoxadone, Polyoxorim, Acibenzolar-S-methyl, Furametpyr, Thifluzamide, Methalaxyl-M, Benthiavalicarb, Metrafenone, Cyflufenamid, Tiadinil, Teebaumöl, Phenoxyethanol,

Ag, Zn oder Cu-haltige Zeolithe allein oder eingeschlossen in polymere Werkstoffe.

Insektizide:

Abamectin, Acephat, Acetamiprid, Acetoprole, Acrinathrin, Alanycarb, Aldicarb, Aldoxycarb, Aldrin, Allethrin, Alpha-cypermethrin, Amidoflumet, Amitraz, Avermectin, Azadirachtin, Azinphos A, Azinphos M, Azocyclotin,
**[0053]** Bacillus thuringiensis, Barthrin, 4-Bromo-2(4-chlorphenyl)-1-(ethoxymethyl)-5-(trifluoromethyl)-1H-pyrrole-3-carbonitrile, Bendiocarb, Benfuracarb, Bensultap, Betacyfluthrin, Bifenthrin, Bioresmethrin, Bioallethrin, Bistrifluron, Bromophos A, Bromophos M, Bufencarb, Buprofezin, Butathiophos, Butocarboxin, Butoxycarboxim,
**[0054]** Cadusafos, Carbaryl, Carbofuran, Carbophenothion, Carbosulfan, Cartap, Chinomethionat, Cloethocarb, 4-Chlor-2-(2-chlor-2-methylpropyl)-5-[(6-iod-3-pyridinyl)methoxy]-3(2H)- pyridazinone (CAS-RN: 120955-77-3), Chlordane, Chlorethoxyfos, Chlorfenapyr, Chlorfenvinphos, Chlorfluazuron, Chlormephos, N-[(6-Chloro-3-pyridinyl)-methyl]-N'-cyano-N-methyl-ethanimid-amide, Chlorpicrin, Chlorpyrifos A, Chlorpyrifos M, Cis-Resmethrin, Clocythrin, Clothiazoben, Cypophenothrin Clofentezin, Coumaphos, Cyanophos, Cycloprothrin, Cyfluthrin, Cyhalothrin, Cyhexatin, Cypermethrin, Cyromazin,
**[0055]** Decamethrin, Deltamethrin, Demeton M, Demeton S, Demeton-S-methyl, Diafenthiuron, Dialiphos, Diazinon, 1,2-Dibenzoyl-1(1,1-dimethyl)-hydrazin, DNOC, Dichlofenthion, Dichlorvos, Dicliphos, Dicrotophos, Difethialone, Diflubenzuron, Dimethoat, 3,5-Dimethylphenyl-methylcarbamat, Dimethyl-(phenyl)-silyl-methyl-3-phenoxybenzylether, Dimethyl-(4-Ethoxyphenyl)-silylmethyl-3-phenoxybenzylether, Dimethylvinphos, Dioxathion, Disulfoton,
**[0056]** Eflusilanate, Emamectin, Empenthrin, Endosulfan, O-Ethyl-O-(4-nitrophenyl)-P-phenylphosphonothioat, Esfenvalerat, Ethiofencarb, Ethion, Etofenprox, Etrimphos, Etoxazole, Etobenzanid,
**[0057]** Fenamiphos, Fenazaquin, Fenbutatinoxid, Fenfluthrin, Fenitrothion, Fenobucarb, Fenothiocarb, Fenoxycarb, Fenpropathrin, Fenpyrad, Fenpyroximat, Fensulfothion, Fenthion, Fenvalerate, Fipronil, Flonicamid, Fluacrypyrim, Fluazuron, Flucycloxuron, Flucythrinate, Flufenerim, Flufenoxuron, Flupyrazofos, Flufenzine, Flumethrin Flufenprox, Fluvalinate, Fonophos, Formethanate, Formothion, Fosmethilan Fosthiazat, Fubfenprox, Furathiocarb,
**[0058]** Halofenocid, HCH (CAS RN: 58-89-9), Heptenophos, Hexaflumuron, Hexythiazox, Hydramethylnon, Hydroprene, Imidacloprid, Imiprothrin, Indoxycarb, Iodfenfos, Iprinomectin, Iprobenfos, Isazophos, Isoamidophos, Isofenphos, Isoprocarb, Isoprothiolane, Isoxathion, Ivermectin, Lama-cyhalothrin, Lufenuron,

Kadedrin,

**[0059]** Lambda-Cyhalothrin, Lufenuron,
**[0060]** Malathion, Mecarbam, Mervinphos, Mesulfenphos, Metaldehyd, Methacrifos, Methamidophos, Methidathion, Methiocarb, Methomyl, Metalcarb, Milbemectin, Monocrotophos, Moxiectin,
**[0061]** Naled, Nicotin, Nitenpyram, Noviflumuron,
**[0062]** Omethoat, Oxamyl, Oxydemethon M, Oxydeprofos,
**[0063]** Parathion A, Parathion M, Penfluron, Permethrin, 2-(4-Phenoxyphenoxy)-ethyl-ethylcarbamat, Phenthoat, Phorat, Phosalon, Phosmet, Phosphamidon, Phoxim, Pirimicarb, Pirimiphos M, Pirimiphos A, Prallethrin, Profenophos, Promecarb, Propaphos, Propoxur, Prothiophos, Prothoat, Pymetrozin, Pyrachlophos, Pyridaphenthion, Pyresmethrin, Pyrethrum, Pyridaben, Pyridalyl, Pyrimidifen, Pyriproxifen, Pyrithiobac-natrium

Quinalphos,

Resmethrin, Rotenone,
**[0065]** Salithion, Sebufos, Silafluofen, Spinosad, Spirodiclofen, Spiromesifen, Sulfotep, Sulprofos,
**[0066]** Tau-fluvalinate, Taroils, Tebufenozide, Tebufenpyrad, Tebupirimphos, Teflubenzuron, Tefluthrin, Temephos, Terbam, Terbufos, Tetrachlorvinphos, Tetramethrin, Tetramethacarb, Thiacloprid, Thiafenox, Thiamethoxam, Thiapronil, Thiodicarb, Thiofanox, Thiazophos, Thiocyclam, Thiomethon, Thionazin, Thuringiensin, Tralomethrin, Transfluthrin, Triarathen, Triazophos, Triazamate, Triazuron, Trichlorfon, Triflumuron, Trimethacarb,

Vamidothion, Xylylcarb, Zetamethrin;

Herbizide und Algizide:

Acetochlor, Acifluorfen, Aclonifen, Acrolein, Alachlor, Alloxydim, Ametryn, Amidosulfuron, Amitrole, Ammonium sulfamate, Anilofos, Asulam, Atrazine, Azafenidin, Aziptrotryne, Azimsulfuron, Benazolin, Benfluralin, Benfuresate, Bensulfuron, Bensulfide, Bentazone, Benzofencap, Benzthiazuron, Bifenox, Bispyribac, Bispyribac-Natrium, Borax, Bromacil, Bromobutide, Bromofenoxim, Bromoxynil, Butachlor, Butamifos, Butralin, Butylate, Bialaphos, Benzoylprop, Bromobutide, Butroxydim,
Carbetamide, Carfentrazone-ethyl, Carfenstrole, Chlomethoxyfen, Chloramben, Chlorbromuron, Chlorflurenol,

Chloridazon, Chlorimuron, Chlornitrofen, Chloroacetic acid, Chloransulam-methyl, Cinidon-ethyl, Chlorotoluron, Chloroxuron, Chlorpropham, Chlorsulfuron, Chlorthal, Chlorthiamid, Cinmethylin, Cinofulsuron, Clefoxydim, Clethodim, Clomazone, Chlomeprop, Clopyralid, Cyanamide, Cyanazine, Cybutryne, Cycloate, Cycloxydim, Chloroxynil, Clodinafop-propargyl, Cumyluron, Clometoxyfen, Cyhalofop, Cyhalofop-butyl, Clopyrasuluron, Cyclosulfamuron, Diclosulam, Dichlorprop, Dichlorprop-P, Diclofop, Diethatyl, Difenoxuron, Difenzoquat, Diflufenican, Diflufenzopyr, Dimefuron, Dimepiperate, Dimethachlor, Dimethipin, Dinitramine, Dinoseb, Dinoseb Acetate, Dinoterb, Diphenamid, Dipropetryn, Diquat, Dithiopyr, Diuron, DNOC (2-methyl-4,6-dinitrophenol), DSMA (Dinatrium methylarsonat), (2,4-dichlorophenoxy)essigsäure, Daimuron, Dalapon, Dazomet, 2,4-DB (4-(2,4-dichlorphenoxy)butansäure), Desmedipham, Desmetryn, Dicamba, Dichlobenil, Dimethamid, Dithiopyr, Dimethametryn,
Eglinazine, Endothal, EPTC (S-Ethyldipropylthiocarbamat), Esprocarb, Ethalfluralin, Ethidimuron, Ethofumesate, Ethobenzanid, Ethoxyfen, Ethametsulfuron, Ethoxysulfuron,
Fenoxaprop, Fenoxaprop-P, Fenuron, Flamprop, Flamprop-M, Flazasulfuron, Fluazifop, Fluazifop-P, Fuenachlor, Fluchloralin, Flufenacet Flumeturon, Fluorocglycofen, Fluoronitrofen, Flupropanate, Flurenol, Fluridone, Flurochloridone, Fluroxypyr, Fomesafen, Fosamine, Fosametine, Flamprop-isopropyl, Flamprop-isopropyl-L, Flufenpyr, Flumiclorac-pentyl, Flumipropyn, Flumioxzim, Flurtamone, Flumioxzim, Flupyrsulfuron-methyl, Fluthiacet-methyl,
Glyphosate, Glufosinate-ammonium
Haloxyfop, Hexazinone,
Imazamethabenz, Isoproturon, Isoxaben, Isoxapyrifop, Imazapyr, Imazaquin, Imazethapyr, Ioxynil, Isopropalin, Imazosulfuron, Imazomox, Isoxaflutole, Imazapic,
Ketospiradox,
Lactofen, Lenacil, Linuron,
MCPA (2-(4-chloro-2-methylphenoxy)essigsäure), MCPA-hydrazid, MCPA-thioethyl, MCPB (4-(4-chlor-2-methylphenoxy)butansäure), Mecoprop, Mecoprop-P, Mefenacet, Mefluidide, Mesosulfuron, Metam, Metamifop, Metamitron, Metazachlor, Methabenzthiazuron, Methazole, Methoroptryne, Methyldymron, Methylisothiocyanate, Metobromuron, Metoxuron, Metribuzin, Metsulfuron, Molinate, Monalide, Monolinuron, MSMA (Natriumhydrogenmethylarsonat), Metolachlor, Metosulam, Metobenzuron,
Naproanilide, Napropamide, Naptalam, Neburon, Nicosulfuron, Norflurazon, Natriumchlorat,
Oxadiazon, Oxyfluorfen, Oxysulfuron, Orbencarb, Oryzalin, Oxadiargyl,
Propyzamide, Prosulfocarb, Pyrazolate, Pyrazolsulfuron, Pyrazoxyfen, Pyribenzoxim, Pyributicarb, Pyridate, Paraquat, Pebulate, Pendimethalin, Pentachlorophenol, Pentoxazone, Pentanochlor, Petroleum oils, Phenmedipham, Picloram, Piperophos, Pretilachlor, Primisulfuron, Prodiamine, Profoxydim, Prometryn, Propachlor, Propanil, Propaquizafob, Propazine, Propham, Propisochlor, Pyriminobac-methyl, Pelargonsäure, Pyrithiobac, Pyraflufen-ethyl,
Quinmerac, Quinocloamine, Quizalofop, Quizalofop-P, Quinchlorac,
Rimsulfuron
Sethoxydim, Sifuron, Simazine, Simetryn, Sulfosulfuron, Sulfometuron, Sulfentrazone, Sulcotrione, Sulfosate,
Teeröle, TCA (Trichloressigsäure), TCA-Natrium, Tebutam, Tebuthiuron, Terbacil, Terbumeton, Terbuthylazine, Terbutryn, Thiazafluoron, Thifensulfuron, Thiobencarb, Thiocarbazil, Tralkoxydim, Triallate, Triasulfuron, Tribenuron, Triclopyr, Tridiphane, Trietazine, Trifluralin, Tycor, Thidiazimin, Thiazopyr, Triflusulfuron,
Vernolate.

Die Erfindung betrifft weiterhin die Verwendung der erfindungsgemäßen Zusammensetzungen zum Schutz von technischen Materialien vor Befall und/oder Zerstörung durch Mikroorganismen.

Unter technischen Materialien sind im vorliegenden Zusammenhang nichtlebende Materialien zu verstehen, die für die Verwendung in der Technik zubereitet worden sind. Beispielsweise können technische Materialien, die durch diese Erfindung vor mikrobieller Veränderung oder Zerstörung geschützt werden sollen, Klebstoffe, Leime, Papier und Karton, Textilien, Leder, Holz, Holzwerkstoffe, Holz-Plastik-Verbundstoffe, Anstrichmittel, Kunststoffartikel, Kühlschmierstoffe und andere Materialien sein, die von Mikroorganismen befallen oder zersetzt werden können. Im Rahmen der zu schützenden Materialien seien auch Teile von Produktionsanlagen, beispielsweise Kühlwasserkreisläufe, genannt, die durch Vermehrung von Mikroorganismen beeinträchtigt werden können. Im Rahmen der vorliegenden Erfindung seien als technische Materialien vorzugsweise Klebstoffe, Leime, Papiere und Kartone, Leder, Holz, Holzwerkstoffe, Holz-Plastikverbundstoffe, Anstrichmittel, Kühlschmiermittel und Wärmeübertragungsflüssigkeiten genannt, besonders bevorzugt sind als technische Materialien Holz, Holzwerkstoffe und Holz-Plastik-Verbundstoffe (sogenannte Wood-Plastic Composites WPC).

Unter Holz wird insbesondere verstanden: Bauholz, Holzbalken, Eisenbahnschwellen, Brückenteile, Bootsstege, Holzfahrzeuge, Kisten, Paletten, Container, Telefonmasten, Holzzäune, Holzverkleidungen, Holzfernster und —türen, Tischlerarbeiten und Holzprodukte, die beim Hausbau oder in der Bautischlerei Verwendung finden.

Unter Holzwerkstoffen wird insbesondere verstanden: Sperrholz, Spanplatten, Faserplatten, OSB-Platten (oriented strand board) oder Verbundplatten.

Unter Holz-Plastik-Verbundstoff wird insbesondere verstanden: thermoplastisch prozessierbare Verbundwerkstoffe

bestehend aus Holz, Kunststoff und Additiven.
Besonders bevorzugt ist Holz.

Als Mikroorganismen, die einen Abbau oder eine Veränderung der technischen Materialien bewirken können, seien beispielsweise Bakterien, Pilze, Hefen, Algen und Schleimorganismen genannt. Vorzugsweise wirken die erfindungsgemäßen Zusammensetzungen gegen holzzerstörende Basidiomyceten, vorzugsweise Holobasidiomyceten.
Hierbei seien insbesondere Pilze der folgenden Gattungen genannt:

Coniophora, wie Coniophora puetana,

Lentinus, wie Lentinus tigrinus,

Polyporus, wie Polyporus versicolor,

Gloeophyllum, wie Gloeophyllum trabeum,

Poria, wie Poria placenta,

Coriolus, wie Coriolus versicolor,

Stereum, wie Stereum sanguinolentum.

Besonders bevorzugt wirken die erfindungsgemäßen Zusammensetzungen gegen Arten der Gattungen Gloeophyllum, Coniophora, Coriolus, Stereum oder Poria. Ganz besonders bevorzugt wirken die erfundungsgemäßen Zusammensetzungen gegen Gloeophyllum trabeum, Coriolus versicolor, Stereum sanguinolentum oder Poria placenta.
Die erfindungsgemäß einzusetzenden Zusammensetzungen wirken darüber hinaus gegen holzverfärbende und Moderfäule verursachende Ascomyceten und zugeordnete Deuteromyceten, wie zum Beispiel
Arten der Gattung Glenospora wie Glenospora graphii,
**[0073]** Arten der Gattung Chaetomium wie Chaetomium globosum,
**[0074]** Arten der Gattung Humicola wie Humicola grisea,
**[0075]** Arten der Gattung Petriella wie Petriella setifera,
**[0076]** Arten der Gattung Trichurus wie Trichurus spiralis,
**[0077]** Arten der Gattung Lecythophora wie Lecythophora mutabilis
Arten der Gattung Sclerophoma wie Sclerophoma pityophila
Arten der Gattung Aureobasidium wie Aureobasidium pullulans.
Die Erfindung betrifft weiterhin technische Materialien insbesondere Holz, Holzwerkstoff oder Holz-Plastik-Verbundstoff enthaltend

a) Penflufen und

b) mindestens eine Verbindung ausgewählt aus der Gruppe Phenole, Borverbindungen, Verbindungen der Formel (II)

$$((R^1R^2R^3R^4)N)_nX \qquad (II)$$

wobei

$R^1$ und $R^2$ gleich oder verschieden sein können und unabhängig voneinander für $C_1$-$C_6$-Alkyl stehen und

$R^3$ und $R^4$ gleich oder verschieden sein können und unabhängig voneinander ausgewählt sind aus der Gruppe $C_6$-$C_{22}$-Alkyl, $C_6$-$C_{22}$-Alkenyl, $C_6C_{24}$-Aryl, $C_5$-$C_{20}$-Cycloalkyl oder Reste der Formel (IV) —$[CH_2$-$CH_2$-$O]_z$-$CH_2$-$CH_2$-OH (IV) wobei z = 1, 2, 3, 4, 5, 6, 7, 8, 9 oder 10 ist und

X ein k-fach geladenes Anion ist und

n eine beliebige ganze Zahl größer als Null darstellt, Isothiazolinone, 3-Iod-2-propinyl-alkylcarbamate, 3-Iod-2-propinylcycloalkylcarbamate, 3-Iod-2-propinyl-arylcarbamat und Verbindungen der Formel (III)

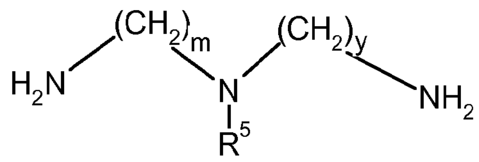

(III)

in der

$R^5$ $C_8$-$C_{18}$-Alkyl, $C_8$-$C_{18}$-Alkenyl oder $C_5$-$C_{20}$-Cycloalkyl und

m und y gleich und verschieden sein können und eine Zahl 1, 2, 3, 4, 5 oder 6 darstellen sowie deren Säureadditionsverbindungen.

Die Erfindung betrifft weiterhin ein Verfahren zum Schutz von technischen Materialien vor Befall und/oder Zerstörung durch Mikroorganismen, dadurch gekennzeichnet, dass man wenigstens eine Zusammensetzung, enthaltend

a) Penflufen und

b) mindestens eine Verbindung ausgewählt aus der Gruppe Phenole, Borverbindungen, Verbindungen der Formel (II)

$$((R^1R^2R^3R^4)N)_nX \qquad (II)$$

wobei

$R^1$ und $R^2$ gleich oder verschieden sein können und unabhängig voneinander für $C_1$-$C_6$-Alkyl stehen und

$R^3$ und $R^4$ gleich oder verschieden sein können und unabhängig voneinander ausgewählt sind aus der Gruppe $C_6$-$C_{22}$-Alkyl, $C_6$-$C_{22}$-Alkenyl, $C_6C_{24}$-Aryl, $C_5$-$C_{20}$-Cycloalkyl oder Reste der Formel (IV) $-[CH_2-CH_2-O]_z-CH_2-CH_2-OH$ (IV) wobei z = 1, 2, 3, 4, 5, 6, 7, 8, 9 oder 10 ist und

X ein k-fach geladenes Anion ist und

n eine beliebige ganze Zahl größer als Null darstellt, Isothiazolinone, 3-Iod-2-propinyl-alkylcarbamate, 3-Iod-2-propinylcycloalkylcarbamate, 3-Iod-2-propinyl-arylcarbamat und Verbindungen der Formel (III)

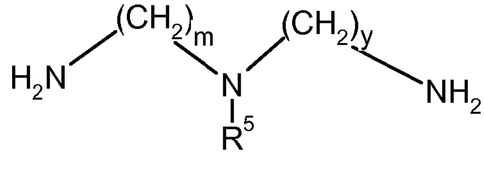

(III)

in der

$R^5$ $C_8$-$C_{18}$-Alkyl, $C_8$-$C_{18}$-Alkenyl oder $C_5$-$C_{20}$-Cycloalkyl

m und y gleich und verschieden sein können und eine Zahl 1, 2, 3, 4, 5 oder 6 darstellen, sowie deren Säureadditionsverbindungen,

auf den Mikroorganismus oder dessen Lebensraum einwirken lässt, wobei die oben genannten bevorzugten Ausführungsformen auch hier gelten.

Bei dem erfindungsgemäßen Verfahren bzw. bei der Verwendung werden die Zusammensetzungen vorzugsweise durch Streichen, Tränken, Besprühen, Imprägnieren oder in sonstiger Weise auf das technische Material aufgetragen.

Bei Holz sind bevorzugt großtechnische Imprägnierverfahren, zum Beispiel das Vakuum-, Doppelvakuum-, Vakuumdruck- oder Druckverfahren.

Holz-Plastik-Verbundstoffe können bspw. dadurch hergestellt werden, dass man Holzpartikel, ein thermoplastisches Polymer und die Zusammensetzungen unter thermischer Energie vermischt, insbesondere extrudiert oder spritzgießt.

Holzwerkstoffe können beispielsweise mit dem Leimuntermischverfahren behandelt werden. Dabei wird die erfindungsgemäße Zusammensetzung ggf. in Form einer Formulierung der Leimflotte beigegeben und dieser biozid-ausgerüstete Leim wie üblich auf die Späne aufgebracht, insbesondere aufgedüst (z.B. bei Span- oder OSB-Platten) oder über Walzen auf die Furniere aufgebracht (z.B. bei Sperrholz). Beim Oberflächenverfahren wird die erfindungsgemäße Zusammensetzung ggf. in Form einer Formulierung auf den Holzwerkstoff aufgesprüht oder mit einer Walze aufgetragen.

Die Anwendungskonzentrationen der erfindungsgemäßen Zusammensetzungen richten sich nach der Art und dem Vorkommen der zu bekämpfenden Mikroorganismen sowie nach der Zusammensetzung des zu schützenden Materials. Die optimale Einsatzmenge kann durch Testreihen ermittelt werden. Im Allgemeinen liegen die Anwendungskonzentrationen im Bereich von 0,001 bis 5 Gewichts%, vorzugsweise von 0,005 bis 1,0 Gewichts% der Zusammensetzung und ggfs. weiterer Zusätze, bezogen auf das zu schützende Material.

Im industriellen Holzschutz wird beispielsweise 10 bis 500 g Wirkstoff pro $m^3$ Holz, vorzugsweise 50 bis 300 $g/m^3$ und ggfs. weiterer Zusätze eingesetzt.

Überraschenderweise wurden neue Zusammensetzungen gefunden, die in synergistischer Weise gegen Mikroorganismen wirken. Dadurch kann der Schutz von technischen Materialien verbessert werden und die Menge an einzusetzenden Wirkstoffen wird reduziert.

Die folgenden Beispiele dienen der beispielhaften Erläuterung der Erfindung und sind nicht als Beschränkung aufzufassen.

## Beispiele

### Synergismus-Tests

Aus einer Kolonie des entsprechenden holzzerstörenden Pilzes wurden Mycelstücke ausgestochen und auf einem Malzextrakt-Pepton-haltigen Nähragar bei 26°C inkubiert. Hierbei wurde das Hyphenwachstum mit und ohne Wirkstoff verglichen. Als Minimale Hemmkonzentration (MHK) wurde die Konzentration angegeben, welche das radiale Hyphenwachstum völlig unterdrückt.

Nach der von Kull et al. (F.C. Kull, P.C. Eismann, H.D. Sylvestrowicz, R.L. Mayer, Applied Microbiology 1961, 9, 538-541) beschriebenen Methode wurde der Synergismus ermittelt. Dabei gelten folgende Beziehungen:

$$\frac{Q_A}{Q_a} + \frac{Q_B}{Q_b} = SI$$

SI = 1 bedeutet Additivität
SI > 1 bedeutet Antagonismus
SI < 1 bedeutet Synergismus
$Q_a$ = Konzentration von Substanz A, welche die MHK darstellt
$Q_b$ = Konzentration von Substanz B, welche die MHK darstellt
$Q_A$ = Konzentration von Substanz A in der Konzentration von A/B, die das Mikrobenwachstum unterbindet
$Q_B$ = Konzentration von Substanz B in der Konzentration von A/B, die das Mikrobenwachstum unterbindet

## Beispiel 1

### Kombinationen von Penflufen und 3-Iod-2-propinyl-N-butylcarbamat (IPBC) gegen den Holzdestruenten Gloeophyllum trabeum

| | MHK gegen Gloeophyllum trabeum (ppm) | SI |
|---|---|---|
| Penflufen | 0,3 | - |
| Penflufen : IPBC 9 : 1 | 0,3 | 0,90 |
| Penflufen : IPBC 4 : 1 | 0,1 | 0,27 |
| Penflufen : IPBC 7 : 3 | 0,3 | 0,71 |
| Penflufen : IPBC 3 : 2 | 0,1 | 0,61 |
| Penflufen : IPBC 1 : 1 | 0,3 | 0,52 |
| Penflufen : IPBC 2 : 3 | 0,3 | 0,42 |
| Penflufen : IPBC 3 : 7 | 0,3 | 0,32 |
| Penflufen : IPBC 1 : 4 | 0,5 | 0,37 |
| Penflufen : IPBC 1 : 9 | 0,7 | 0,30 |
| IPBC | 10,0 | - |

**Beispiel 2**

**Kombinationen von Penflufen und 4,5-Dichloro-N-octylisothiazolin-3-on (DCOIT) gegen den Holzdestruenten Poria placenta**

| | MHK gegen Poria placenta (ppm) | SI |
|---|---|---|
| Penflufen | 0,3 | - |
| Penflufen : DCOIT 9 : 1 | 0,1 | 0,30 |
| Penflufen : DCOIT 4 : 1 | 0,1 | 0,27 |
| Penflufen : DCOIT 7 : 3 | 0,1 | 0,23 |
| Penflufen : DCOIT 3 : 2 | 0,1 | 0,20 |
| Penflufen : DCOIT 1 : 1 | 0,3 | 0,51 |
| Penflufen : DCOIT 2 : 3 | 0,3 | 0,41 |
| Penflufen : DCOIT 3 : 7 | 0,3 | 0,31 |
| Penflufen : DCOIT 1 : 4 | 0,5 | 0,35 |
| Penflufen : DCOIT 1 : 9 | 1,0 | 0,38 |
| DCOIT | 20,0 | - |

**Beispiel 3**

**Kombinationen von Penflufen und N-(3-Aminopropyl)-N-dodecyl-1,3-propandiamin (Lonzabac) gegen den Holzdestruenten Coriolus versicolor**

| | MHK gegen Coriolus versicolor (ppm) | SI |
|---|---|---|
| Penflufen | 0,5 | - |
| Penflufen : Lonzabac 9 : 1 | 0,3 | 0,54 |

(fortgesetzt)

| | MHK gegen Coriolus versicolor (ppm) | SI |
|---|---|---|
| Penflufen : Lonzabac 4 : 1 | 0,3 | 0,48 |
| Penflufen : Lonzabac 7 : 3 | 0,3 | 0,42 |
| Penflufen : Lonzabac 3 : 2 | 0,5 | 0,60 |
| Penflufen : Lonzabac 1 : 1 | 0,1 | 0,10 |
| Penflufen : Lonzabac 2 : 3 | 0,1 | 0,08 |
| Lonzabac | 30,0 | - |

**Beispiel 4**

**Kombinationen von Penflufen und Didecyldimethylammoniumchlorid (DDAC) gegen die Holzdestruenten Coriolus versicolor und Poria placenta**

| | | MHK (ppm) | | SI | |
|---|---|---|---|---|---|
| | | Coriolus versicolor | Poria placenta | Coriolus versicolor | Poria placentaa |
| Penflufen | | 0,1 | 0,1 | | |
| Penflufen : DDAC | 7 : 3 | 0,1 | 0,1 | 0,70 | 0,70 |
| Penflufen : DDAC | 6:4 | 0,1 | 0,1 | 0,60 | 0,60 |
| Penflufen : DDAC | 1 : 1 | 0,1 | 0,1 | 0,50 | 0,50 |
| Penflufen : DDAC | 4 : 6 | 0,1 | 0,1 | 0,40 | 0,40 |
| Penflufen : DDAC | 3 : 7 | 0,1 | 0,1 | 0,30 | 0,30 |
| Penflufen : DDAC | 2 : 8 | 0,1 | 0,1 | 0,20 | 0,20 |
| Penflufen : DDAC | 1 : 9 | 0,3 | 0,3 | 0,30 | 0,69 |
| DDAC | | 60,0 | 100,0 | | |

**Beispiel 5**

**Kombinationen von Penflufen und Didecylmethylpoly(oxyethyl)ammoniumpropionat (DDA propionat) gegen die Holzdestruenten Stereum sanguinolentum und Poria placenta**

| | | MHK (ppm) | | SI | |
|---|---|---|---|---|---|
| | | Stereum sanguinolentumm | Poria placenta | Stereum sanguinolentumm | Poria placenta |
| Penflufen | | 3,0 | 0,3 | | |
| Penflufen : DDA propionat | 8 : 2 | 0,7 | 0,1 | 0,19 | 0,27 |
| Penflufen : DDA propionat | 7 : 3 | 0,7 | 0,3 | 0,17 | 0,70 |
| Penflufen : DDA propionat | 6 : 4 | 3,0 | 0,1 | 0,64 | 0,20 |

(fortgesetzt)

| | | MHK (ppm) | | SI | |
|---|---|---|---|---|---|
| | | Stereum sanguinolentumm | Poria placenta | Stereum sanguinolentumm | Poria placenta |
| Penflufen : DDA propionat | 1 : 1 | 3,0 | 0,1 | 0,55 | 0,17 |
| Penflufen : DDA propionat | 4 : 6 | 3,0 | 0,3 | 0,46 | 0,40 |
| Penflufen : DDA propionat | 3 : 7 | 1,0 | 0,5 | 0,12 | 0,50 |
| Penflufen : DDA propionat | 2 : 8 | 3,0 | 0,7 | 0,28 | 0,47 |
| Penflufen : DDA propionat | 1 : 9 | 3,0 | 0,7 | 0,19 | 0,24 |
| DDA propionat | | 30,0 | 100,0 | | |

**Beispiel 6**

**Kombinationen von Penflufen und Benzalkoniumchlorid gegen den Holzdestruenten Poria placenta**

| | MHK gegen Poria placenta (ppm) | SI |
|---|---|---|
| Penflufen | 0,3 | - |
| Penflufen : Benzalkoniumchlorid 1 : 1 | 0,3 | 0,50 |
| Penflufen : Benzalkoniumchlorid 4 : 6 | 0,3 | 0,40 |
| Penflufen : Benzalkoniumchlorid 3 : 7 | 0,.5 | 0,50 |
| Penflufen : Benzalkoniumchlorid 2 : 8 | 0,5 | 0,34 |
| Penflufen : Benzalkoniumchlorid 1 : 9 | 1,0 | 0,34 |
| Benzalkoniumchlorid | 100,0 | - |

**Beispiel 7**

**Kombinationen von Penflufen und einer Mischung aus Didecyldimethylammoniumcarbonat und Didecyldimethylhydrogencarbonat (Carboquat) gegen die Holzdestruenten Stereum sanguinolentum und Poria placenta**

| | | MHK (ppm) | | SI | |
|---|---|---|---|---|---|
| | | Stereum sanguinolentumm | Poria placentaa | Stereum sanguinolentumm | Poria placentaa |
| Penflufen | | 3,0 | 0,3 | | |
| Penflufen : Carboquat | 7 : 3 | 3,0 | 0,3 | 0,7 | 0,7 |
| Penflufen : Carboquat | 6 : 4 | 1,0 | 0,3 | 0,2 | 0,6 |

(fortgesetzt)

| | | MHK (ppm) | | SI | |
|---|---|---|---|---|---|
| | | Stereum sanguinolentumm | Poria placentaa | Stereum sanguinolentumm | Poria placentaa |
| Penflufen : Carboquat | 1 : 1 | 3,0 | 0,3 | 0,6 | 0,5 |
| Penflufen : Carboquat | 4 : 6 | 3,0 | 0,3 | 0,5 | 0,4 |
| Penflufen : Carboquat | 3 : 7 | 3,0 | 0,5 | 0,4 | 0,5 |
| Penflufen : Carboquat | 2 : 8 | 3,0 | 1,0 | 0,3 | 0,7 |
| Carboquat | 7 : 3 | 30,0 | 30,0 | | |

**Beispiel 8**

**Kombinationen von Penflufen und Boroxid ($B_2O_3$) gegen den Holzdestruenten Coniophora puteana**

| | MHK gegen Coniophora puteana (ppm) | SI |
|---|---|---|
| Penflufen | 0,7 | - |
| Penflufen : Boroxid 7 : 3 | 0,3 | 0,30 |
| Penflufen : Boroxid 6 : 4 | 0,5 | 0,43 |
| Penflufen : Boroxid 1 : 1 | 1,0 | 0,72 |
| Penflufen : Boroxid 4 : 6 | 0,7 | 0,40 |
| Boroxid | 100 | - |

**Beispiel 9**

**Kombinationen von Penflufen und Borsäure gegen die Holzdestruenten Coriolus versicolor und Gloeophyllum trabeum**

| | | MHK (ppm) | | SI | |
|---|---|---|---|---|---|
| | | Coriolus versicolor | Gloeophyllum trabeum | Coriolus versicolor | Gloeophyllum trabeum |
| Penflufen | | 0,1 | 0,3 | | |
| Penflufen : Borsäure | 7 : 3 | 0,1 | 0,3 | 0,70 | 0,70 |
| Penflufen : Borsäure | 6 : 4 | 0,1 | 0,3 | 0,60 | 0,60 |
| Penflufen : Borsäure | 1 : 1 | 0,1 | 0,3 | 0,50 | 0,50 |
| Penflufen : Borsäure | 4 : 6 | 0,1 | 0,5 | 0,40 | 0,67 |

(fortgesetzt)

| | | MHK (ppm) | | SI | |
|---|---|---|---|---|---|
| | | **Coriolus versicolor** | **Gloeophyllum trabeum** | **Coriolus versicolor** | **Gloeophyllum trabeum** |
| Penflufen : Borsäure | 3 : 7 | 0,1 | 0,7 | 0,30 | 0,70 |
| Penflufen : Borsäure | 2 : 8 | 0,1 | 0,7 | 0,20 | 0,47 |
| Penflufen : Borsäure | 1 : 9 | 0,3 | | 0,30 | |
| Borsäure | | 100,0 | 100,0 | | |

**Beispiel 10**

**Kombinationen von Penflufen und Natriumborat gegen den Holzdestruenten Poria placenta**

| | MHK gegen Poria placenta (ppm) | SI |
|---|---|---|
| Penflufen | 0,3 | - |
| Penflufen : Natriumborat 9 : 1 | 0,1 | 0,30 |
| Penflufen : Natriumborat 8 : 2 | 0,1 | 0,27 |
| Penflufen : Natriumborat 7 : 3 | 0,1 | 0,23 |
| Penflufen : Natriumborat 6 : 4 | 0,1 | 0,20 |
| Penflufen : Natriumborat 1 : 1 | 0,1 | 0,17 |
| Penflufen : Natriumborat 4 : 6 | 0,1 | 0,13 |
| Penflufen : Natriumborat 3 : 7 | 0,1 | 0,10 |
| Penflufen : Natriumborat 2 : 8 | 0,1 | 0,07 |
| Penflufen : Natriumborat 1 : 9 | 0,5 | 0,17 |
| Natriumborat | 100,0 | - |

**Beispiel 11**

**Kombinationen von Penflufen und o-Phenylphenol gegen den Holzdestruenten Gloeophyllum trabeum**

| | MHK gegen Gloeophyllum trabeum (ppm) | SI |
|---|---|---|
| Penflufen | 0,7 | - |
| Penflufen : o-Phenylphenol 7 : 3 | 0,7 | 0,70 |
| Penflufen : o-Phenylphenol 6 : 4 | 0,5 | 0,43 |
| Penflufen : o-Phenylphenol 1 : 1 | 1,0 | 0,72 |
| Penflufen : o-Phenylphenol 4 : 6 | 0,7 | 0,41 |
| Penflufen : o-Phenylphenol 3 : 7 | 0,7 | 0,31 |
| Penflufen : o-Phenylphenol 2 : 8 | 1,0 | 0,30 |

(fortgesetzt)

| | MHK gegen Gloeophyllum trabeum (ppm) | SI |
|---|---|---|
| Penflufen : o-Phenylphenol 1 : 9 | 3,0 | 0,47 |
| o-Phenylphenol | 60,0 | - |

## Patentansprüche

**1.** Zusammensetzungen, enthaltend

a) Penflufen
und
b) mindestens eine Verbindung ausgewählt aus der Gruppe Phenole, Borverbindungen, Verbindungen der Formel (II)

$$((R^1R^2R^3R^4)N)_nX \qquad (II)$$

wobei

$R^1$ oder $R^2$ gleich oder verschieden sein können und unabhängig voneinander für $C_1$-$C_6$-Alkyl stehen und
$R^3$ oder $R^4$ gleich oder verschieden sein können und unabhängig voneinander ausgewählt sind aus der Gruppe $C_6$-$C_{22}$-Alkyl, $C_6$-$C_{22}$-Alkenyl, $C_6C_{24}$-Aryl, $C_5$-$C_{20}$-Cycloalkyl oder Reste der Formel (IV) $-[CH_2-CH_2-O]_z-CH_2-CH_2-OH$ (IV) wobei z = 1, 2, 3, 4, 5, 6, 7, 8, 9 oder 10 ist und
X ein k-fach geladenes Anion ist und
n eine beliebige ganze Zahl größer als Null darstellt, Isothiazolinone, 3-Iod-2-propinyl-alkylcarbamate, 3-Iod-2-propinylcycloalkylcarbamate, 3-Iod-2-propinyl-arylcarbamat und Verbindungen der Formel (III)

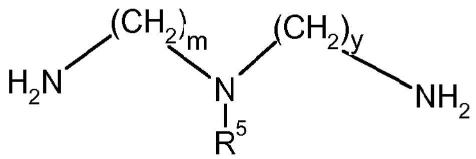

(III)

in der

$R^5$ $C_8$-$C_{18}$-Alkyl, $C_8$-$C_{18}$-Alkenyl oder $C_5$-$C_{20}$-Cycloalkyl und
m und y gleich und verschieden sein können und eine Zahl 1, 2, 3, 4, 5 oder 6 darstellen sowie deren Säureadditionsverbindungen.

**2.** Zusammensetzung gemäß Anspruch 1, **dadurch gekennzeichnet, dass** die Borverbindung ausgewählt wird aus der Gruppe Dinatriumtetraborat Decahydrat (Borax), Borsäure, Borsäureester, Boroxid und Dinatriumoctaborat Tetrahydrat.

**3.** Zusammensetzung gemäß mindestens einem der Ansprüche 1 oder 2, **dadurch gekennzeichnet, dass** das Isothiazolinon ausgewählt wird aus der Gruppe N-Methylisothiazolin-3-on, 5-Chlor-N-methylisothiazolin-3-on, 4,5-Dichloro-N-octyliso-thiazolin-3-on, 5-Chlor-N-octylisothiazolinon, N-Octyl-isothiazolin-3-on, 4,5-Trimethylen-isothiazolinon und 4,5-Benzisothiazolinon.

**4.** Zusammensetzung gemäß mindestens einem der Ansprüche 1 bis 3, **dadurch gekennzeichnet, dass** $R^3$ oder $R^4$ in Verbindungen der Formel (II) gleich oder verschieden sein können und unabhängig voneinander ausgewählt sind aus der Gruppe Benzyl, $—CH_2-CH_2-O-CH_2-CH_2-OH$, $—[CH_2-CH_2-O]_2-CH_2-CH_2-OH$, $—[CH_2-CH_2-O]_3-CH_2-CH_2-OH$, $—[CH_2-CH_2-O]_4-CH_2-CH_2-OH$, Dichlorbenzyl, n-, iso-Nonyl, n-, iso-Decyl, n-, iso-Dodecyl, n-, iso-Hexadecyl

n-, iso-Octenyl, n-, iso-Nonenyl oder n-, iso-Decenyl und $R^1$ und $R^2$ für Methyl stehen.

**5.** Zusammensetzung gemäß mindestens einem der Ansprüche 1 bis 4, **dadurch gekennzeichnet, dass** die Verbindungen der Formel (III) ausgewählt sind aus der Gruppe N-(3-Aminopropyl)-N-dodecyl-1,3-propandiamin, N-(3-Aminopropyl)-N-decyl-1,3-propandiamin, N-(3-Aminopropyl)-N-tetradecyl-1,3-propandiamin sowie deren Säureadditionsverbindungen.

**6.** Zusammensetzung gemäß mindestens einem der Ansprüche 1 bis 5, **dadurch gekennzeichnet, dass** die Phenole ausgewählt sind aus der Gruppe Tribromphenol, Tetrachlorphenol, 3-Methyl-4-chlorphenol, 3,5-Dimethyl-4-chlorphenol, Dichlorphen, 2-Benzyl-4-chlorphenol, Triclosan, Diclosan, Hexachlorophen, p-Hydroxybenzoesäureester, o-Phenylphenol, m-Phenylphenol, p-Phenylphenol, 4-(2-tert.-Butyl-4-methyl-phenoxy)-phenol, 4-(2-Isopropyl-4-methyl-phenoxy)-phenol, 4-(2,4-Dimethyl-phenoxy)-phenol und deren Alkali- und Erdalkalimetallsalze.

**7.** Zusammensetzung gemäß mindestens einem der Ansprüche 1 bis 6, **dadurch gekennzeichnet, dass** mindestens 75 Gew. % — 85 Gew.-% Penflufen und 15 Gew.-% - 25 Gew.-% 3-Iod-2-propinyl-N-butylcarbamat enthalten sind.

**8.** Zusammensetzung gemäß mindestens einem der Ansprüche 1 bis 7, **dadurch gekennzeichnet, dass** mindestens 50 Gew.-% Penflufen und mindestens 10 Gew.% 4,5-Dichloro-N-octyliso-thiazolin-3-on enthalten sind.

**9.** Zusammensetzungen nach einem oder mehreren der Ansprüche 1 bis 8 **dadurch gekennzeichnet, dass** die Zusammensetzung

a) Penflufen
und
b) mindestens eine Verbindung ausgewählt aus der Gruppe o-Phenylphenol und dessen Alkali- und Erdalkalimetallsalze

Natriumborat, Borsäure, Boroxid,
Benzalkoniumchlorid, Didecyldimethylammoniumchlorid, Didecylmethylpoly(oxy-ethyl)ammoniumpropionat, Didecyldimethylammoniumcarbonat, Didecyldimethylammoniumhydrogencarbonat oder eine Mischung aus Didecyldimethylammoniumcarbonat und Didecyldimethylammoniumhydrogencarbonat 4,5-Dichloro-N-octylisothiazolin-3-on,
3-Iod-2-propinyl-N-butylcarbamat, N-(3-Aminopropyl)-N-dodecyl-1,3-propandiamin,
enthält.

**10.** Verwendung von Zusammensetzungen gemäß wenigstens einem der Ansprüche 1 bis 9 zum Schutz von technischen Materialien vor Befall und/oder Zerstörung durch Mikroorganismen.

**11.** Verwendung gemäß Anspruch 10, **dadurch gekennzeichnet, dass** das technische Material Holz, Holzwerkstoff oder Holz-Plastik-Verbundstoff ist.

**12.** Verwendung gemäß Anspruch 11 zum Schutz von Holz, Holzwerkstoff oder Holz-Plastik-Verbundstoff durch holzzerstörende Basidiomyceten, insbesondere Holobasidiomyceten.

**13.** Verwendung gemäß Anspruch 12 zum Schutz von Holz, Holzwerkstoff oder Holz-Plastik-Verbundstoff durch holzzerstörende Basidiomyceten, **dadurch gekennzeichnet, dass** es sich bei den holzzerstörenden Basidiomyceten um Arten der Gattungen Gloeophyllum, Coniophora, Coriolus, Stereum oder Poria handelt.

**14.** Technische Materialien, insbesondere Holz, Holzwerkstoff oder Holz-Plastik-Verbundstoff enthaltend

a) Penflufen
und
b) mindestens eine Verbindung ausgewählt aus der Gruppe
Phenole, Borverbindungen, Verbindungen der Formel (II)

$$((R^1R^2R^3R^4)N)_nX \qquad (II)$$

wobei

$R^1$ oder $R^2$ gleich oder verschieden sein können und unabhängig voneinander für $C_1$-$C_6$-Alkyl stehen und
$R^3$ oder $R^4$ gleich oder verschieden sein können und unabhängig voneinander ausgewählt sind aus der Gruppe $C_6$-$C_{22}$-Alkyl, $C_6$-$C_{22}$-Alkenyl, $C_6C_{24}$-Aryl, $C_5$-$C_{20}$-Cycloalkyl oder Reste der Formel (IV) —[$CH_2$-$CH_2$-O]$_z$-$CH_2$-$CH_2$-OH (IV) wobei z = 1, 2, 3, 4, 5, 6, 7, 8, 9 oder 10 ist und
X ein k-fach geladenes Anion ist und
n eine beliebige ganze Zahl größer als Null darstellt, Isothiazolinone, 3-Iod-2-propinyl-alkylcarbamate, 3-Iod-2-propinylcycloalkylcarbamate, 3-Iod-2-propinyl-arylcarbamat und Verbindungen der Formel (III)

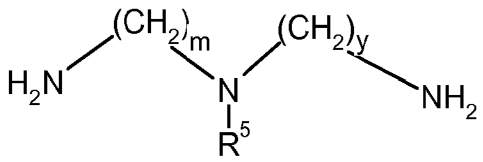

(III)

in der

$R^5$ $C_8$-$C_{18}$-Alkyl, $C_8$-$C_{18}$-Alkenyl oder $C_5$-$C_{20}$-Cycloalkyl und
m und y gleich und verschieden sein können und eine Zahl 1, 2, 3, 4, 5 oder 6 darstellen sowie deren Säureadditionsverbindungen.

**15.** Verfahren zum Schutz von technischen Materialien vor Befall und/oder Zerstörung durch Mikroorganismen, **dadurch gekennzeichnet, dass** man wenigstens eine Zusammensetzung, enthaltend

a) Penflufen
und
b) mindestens eine Verbindung ausgewählt aus der Gruppe
Phenole, Borverbindungen, Verbindungen der Formel (II)

$$((R^1R^2R^3R^4)N)_nX \qquad (II)$$

wobei

$R^1$ oder $R^2$ gleich oder verschieden sein können und unabhängig voneinander für $C_1$-$C_6$-Alkyl stehen und
$R^3$ oder $R^4$ gleich oder verschieden sein können und unabhängig voneinander ausgewählt sind aus der Gruppe $C_6$-$C_{22}$-Alkyl, $C_6$-$C_{22}$-Alkenyl, $C_6C_{24}$-Aryl, $C_5$-$C_{20}$-Cycloalkyl oder Reste der Formel (IV) —[$CH_2$-$CH_2$-O]$_z$-$CH_2$-$CH_2$-OH (IV) wobei z = 1, 2, 3, 4, 5, 6, 7, 8, 9 oder 10 ist und
X ein k-fach geladenes Anion ist und
n eine beliebige ganze Zahl größer als Null darstellt, Isothiazolinone, 3-Iod-2-propinyl-alkylcarbamate, 3-Iod-2-propinylcycloalkylcarbamate, 3-Iod-2-propinyl-arylcarbamat und Verbindungen der Formel (III)

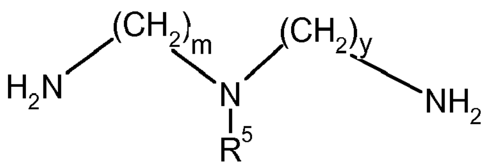

(III)

in der

$R^5$ $C_8$-$C_{18}$-Alkyl, $C_8$-$C_{18}$-Alkenyl oder $C_5$-$C_{20}$-Cycloalkyl und
m und y gleich und verschieden sein können und eine Zahl 1, 2, 3, 4, 5 oder 6 darstellen, sowie deren Säureadditionsverbindungen,

auf den Mikroorganismus oder dessen Lebensraum einwirken lässt.

Europäisches Patentamt
European Patent Office
Office européen des brevets

# EUROPÄISCHER RECHERCHENBERICHT

Nummer der Anmeldung
EP 10 18 8713

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | WO 2006/114212 A2 (BAYER CROPSCIENCE AG [DE]; SUTY-HEINZE ANNE [DE]; HUNGENBERG HEIKE [DE) 2. November 2006 (2006-11-02)<br>* Anspruch 6 *<br>* Seiten 13-15 *<br>* Seite 34, Zeilen 10-11 *<br>* Seite 37, Zeilen 34-35 *<br>----- | 1,9-15 | INV.<br>A01N43/56<br>A01N47/12<br>A01N43/80<br>A01N33/04<br>A01N33/12<br>A01N59/14<br>A01N31/08<br>A01P3/00 |
| X,D | WO 03/010149 A1 (BAYER AG [DE]; ELBE HANS-LUDWIG [DE]; RIECK HEIKO [DE]; DUNKEL RALF [D) 6. Februar 2003 (2003-02-06)<br>* page 55: compound I-25 *<br>* page 75. compound 20 *<br>* Seite 30, Zeilen 1-3 *<br>* Seite 33, Zeile 14 - Seite 35, Zeile 2 *<br>* Seite 38, Zeile 28 *<br>----- | 1,6, 10-15 | |
| X | WO 2006/131221 A2 (BAYER CROPSCIENCE AG [DE]; DUNKEL RALF [FR]; ELBE HANS-LUDWIG [DE]; GA) 14. Dezember 2006 (2006-12-14)<br>* claims 4 and 5 and page 20: compound (2) *<br>* Seite 31, Zeile 20 *<br>----- | 1,6, 10-15 | RECHERCHIERTE SACHGEBIETE (IPC) |
| A | DE 195 48 873 A1 (BAYER AG [DE])<br>3. Juli 1997 (1997-07-03)<br>* das ganze Dokument *<br>----- | 1-15 | A01N |

Der vorliegende Recherchenbericht wurde für alle Patentansprüche erstellt

| Recherchenort | Abschlußdatum der Recherche | Prüfer |
|---|---|---|
| München | 28. April 2011 | Götz, Gerhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

1

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 10 18 8713

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-04-2011

| Im Recherchenbericht angeführtes Patentdokument | Datum der Veröffentlichung | Mitglied(er) der Patentfamilie | Datum der Veröffentlichung |
|---|---|---|---|
| WO 2006114212 A2 | 02-11-2006 | AR 053716 A1 | 16-05-2007 |
| | | AT 482618 T | 15-10-2010 |
| | | AU 2006239579 A1 | 02-11-2006 |
| | | BR PI0609863 A2 | 11-05-2010 |
| | | CA 2606230 A1 | 02-11-2006 |
| | | DE 102005022147 A1 | 02-11-2006 |
| | | EA 200702312 A1 | 28-02-2008 |
| | | EP 1876897 A2 | 16-01-2008 |
| | | EP 2213168 A1 | 04-08-2010 |
| | | JP 2008539179 T | 13-11-2008 |
| | | KR 20080005570 A | 14-01-2008 |
| | | US 2008293566 A1 | 27-11-2008 |
| WO 03010149 A1 | 06-02-2003 | BR 0211482 A | 17-08-2004 |
| | | CN 1533380 A | 29-09-2004 |
| | | DE 10136065 A1 | 13-02-2003 |
| | | EP 1414803 A1 | 06-05-2004 |
| | | HU 0401478 A2 | 29-11-2004 |
| | | IL 159839 A | 30-11-2010 |
| | | JP 4550412 B2 | 22-09-2010 |
| | | JP 2005501044 T | 13-01-2005 |
| | | JP 2010195800 A | 09-09-2010 |
| | | KR 20090052908 A | 26-05-2009 |
| | | MX PA04000622 A | 20-04-2004 |
| | | PL 365036 A1 | 27-12-2004 |
| | | US 2004204470 A1 | 14-10-2004 |
| | | ZA 200400434 A | 21-01-2005 |
| WO 2006131221 A2 | 14-12-2006 | AR 054280 A1 | 13-06-2007 |
| | | BR PI0613488 A2 | 11-01-2011 |
| | | CN 101212899 A | 02-07-2008 |
| | | DE 102005025989 A1 | 11-01-2007 |
| | | EP 1890540 A2 | 27-02-2008 |
| | | JP 2008545763 T | 18-12-2008 |
| | | KR 20080018912 A | 28-02-2008 |
| | | US 2009105311 A1 | 23-04-2009 |
| DE 19548873 A1 | 03-07-1997 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 03010149 A
- WO 2006114212 A
- WO 2009098225 A2
- WO 2005041653 A
- WO 200909821 A
- WO 20090901 A
- WO 2005058839 A
- WO 2007110173 A
- WO 2008014955 A


### In der Beschreibung aufgeführte Nicht-Patentliteratur


- **F.C. KULL ; P.C. EISMANN ; H.D. SYLVESTROWICZ ; R.L. MAYER.** *Applied Microbiology,* 1961, vol. 9, 538-541